# FASCICULE DE BREVET EUROPEEN

(11) **EP 3 559 483 B1**
(45) Date de publication et mention de la délivrance du brevet: **03.02.2021**
(21) Numéro de dépôt: 17837978.0
(22) Date de dépôt: 22.12.2017
(51) Int. Cl.: F16B 5/02, F16B 43/02

(54) **DISPOSITIF D'ECARTEMENT A RATTRAPAGE ANGULAIRE**
ABSTANDSVORRICHTUNG MIT WINKELANPASSUNG
SPACING DEVICE WITH ANGULAR ADJUSTMENT

(30) Priorité: 23.12.2016 FR 1663342
(43) Date de publication de la demande: 30.10.2019
(73) Titulaire: A Raymond Et Cie, 38000 Grenoble (FR)
(72) Inventeur: LAMOUREUX, David, 38000 Grenoble (FR)
(74) Mandataire: IP Trust
(86) Numéro de dépôt international: PCT/FR2017/053838
(87) Numéro de publication internationale: WO 2018/115799

(56) Documents cités:
- EP-A1- 2 130 722
- DE-A1-102010 000 134
- DE-A1-102011 054 861
- DE-U1-202011 100 696
- DE-U1-202011 105 303
- TW-A- 201 008 723
- "KUGEL-AUSGLEICHS-SCHEIBE KAS", ANTRIEBSTECHNIK, VEREINIGTE FACHVERLAGE, MAINZ, DE, vol. 33, no. 11, 1 novembre 1994 (1994-11-01), page 34/35, XP000503272, ISSN: 0722-8546

## Description

### DOMAINE DE L'INVENTION

La présente invention concerne un dispositif d'écartement pouvant être disposé entre deux supports de manière à combler la distance les séparant. L'invention trouve une application particulière dans le domaine de l'automobile, pour combler l'espace libre existant entre un élément porteur et une carrosserie de toit d'un véhicule et permettre, par exemple, la fixation de barres de toit sur ce véhicule.

### ARRIERE PLAN TECHNOLOGIQUE DE L'INVENTION

On connaît du document EP2532568 un dispositif d'écartement visant à combler un espace compris entre des éléments de tôleries qui composent la structure d'un véhicule et permettant de compenser des écarts de cote pouvant exister entre ces éléments. Ce dispositif d'écartement connu comprend une pièce de fixation destinée à prendre appui et/ou à être fixée sur un premier support et une pièce d'écartement présentant une extrémité d'appui destinée à entrer en contact avec un second support, placé en regard du premier. La pièce de fixation et la pièce d'écartement sont assemblées entre elles au niveau de filetages permettant de les déplacer l'une par rapport à l'autre selon une direction axiale, pour permettre d'ajuster le dispositif d'écartement à la distance séparant les deux supports.

Dans ce document cité, le dispositif d'écartement est rendu solidaire d'une barre de toit disposée sur la face extérieure du premier support par l'intermédiaire d'une vis traversant. Un système boulon - rondelle du côté de la face extérieure du second support permet de verrouiller le dispositif d'écartement et de maintenir fixement la barre de toile sur le premier support.

La pièce d'écartement est entraînée en rotation par la vis de fixation de la barre de toit. L'ajustement à la distance séparant les deux supports et la fixation de la barre de toit (ou plus généralement le verrouillage du dispositif d'écartement) sont réalisés simultanément. Si ces deux fonctions ne sont pas parfaitement coordonnées, il est possible que le verrouillage intervienne avant que la pièce d'écartement ne soit parfaitement en place, ce qui peut conduire à déformer l'un ou l'autre des supports.

Par ailleurs, la présence de la barre de toit du côté du premier support impose de travailler du côté du second support, à l'intérieur du véhicule, pour régler le dispositif d'écartement. L'espace réduit et confiné contribue à rendre l'installation du dispositif d'écartement malaisé.

Enfin, lorsque le premier support et le second support présentent un décalage angulaire, c'est à dire lorsque les faces en regard des supports ne sont pas parfaitement parallèles l'une à l'autre, la mise en contact de la pièce d'écartement avec le second support est imparfaite. Dans ce cas, le verrouillage du dispositif d'écartement par la vis de fixation peut conduire à la déformation de l'un ou l'autre des supports.

D'autres formes de dispositifs d'écartement sont connus de EP2130722, DE102010000134, DE202011100696U ou du document « Kugel-Ausgleichs-scheibe Kas », Antriebstechnik, Vereinigte Fachverlage, Mainz, DE, Vol 33, n 11, 1/11/2014.

La présente invention vise à pallier tout ou partie des inconvénients précités.

### BREVE DESCRIPTION DE L'INVENTION

En vue de la réalisation de ce but, l'objet de l'invention propose un dispositif d'écartement à rattrapage angulaire pour combler l'espace séparant un premier support d'un second support disposé en regard du premier support, le dispositif d'écartement comprenant :
- une pièce de fixation destinée à être rendue solidaire du premier support et présentant un filetage interne ;
- une pièce d'écartement présentant un filetage externe et une extrémité d'appui à bout sphérique;
- une bague d'entrainement comprenant un système d'accroche, la bague d'entrainement étant logée dans la pièce d'écartement et couplée à cette pièce ;
la pièce de fixation et la pièce d'écartement étant assemblées entre elles au niveau de leurs filetages respectifs et pouvant se déplacer l'une par rapport à l'autre selon une direction axiale pour ajuster le dispositif d'écartement à la distance séparant les deux supports.

Le dispositif d'écartement comprend une bague d'appui maintenue contre la pièce d'écartement et retenue par le dispositif d'accroche de la bague d'entrainement, la bague d'appui présentant une première face plane pour prendre appui sur le second support, et une seconde face à calotte sphérique recevant l'extrémité d'appui à bout sphérique de la pièce d'écartement.

Selon d'autres caractéristiques avantageuses et non limitatives de l'invention, prises seules ou selon toute combinaison techniquement réalisable :
- la bague d'entraînement est munie d'au moins moins un bossage ou d'au moins une empreinte pour faciliter l'application d'un couple de rotation par un outil ;
- le système d'accroche et la bague d'appui présentent un jeu de fonctionnement suffisant pour permettre un mouvement de la bague d'appui ;
- le système d'accroche est formé d'au moins un cran pour recevoir un épaulement interne de la bague d'appui ;
- le cran est défini par un épaulement externe et une collerette de retenue portée par une languette flexible ;
- l'épaulement externe est porté par la languette flexible ;
- la pièce de fixation comprend un corps d'appui et un organe de retenue permettant de solidariser le dispositif au premier support.

### BREVE DESCRIPTION DES DESSINS

D'autres caractéristiques et avantages de l'invention ressortiront de la description détaillée de l'invention qui va suivre en référence aux figures annexées sur lesquels :
- les figures 1a et 1b représentent respectivement en vue éclatée et en coupe un dispositif d'écartement selon un premier mode de réalisation et conforme à l'invention ;
- les figures 2a à 2d représentent les différentes étapes de la mise en place d'un exemple particulier du dispositif d'écartement de l'invention ;
- la figure 3 représente une vue éclatée d'un dispositif d'écartement suivant un deuxième mode de réalisation et conforme à l'invention.

### DESCRIPTION DETAILLEE DE L'INVENTION

Un dispositif d'écartement conforme à l'invention est destiné à combler l'espace compris entre un premier support et un second support, disposés en regard l'un de l'autre. On désignera par le terme « face interne », les faces du premier et du second support qui sont placées en vis-à-vis l'une de l'autre ; et par « face externe » les faces du premier et du second support opposées à ces faces internes. La distance séparant le premier et le second support n'est pas précisément connue, et le dispositif de l'invention permet justement de compenser ces écarts pouvant exister d'un point à l'autre des supports. À ce titre, plusieurs dispositifs d'écartement peuvent être disposés entre les supports de sorte à contrôler plus précisément la distance les séparant sur toutes leurs étendues.

Usuellement, ces supports sont plans, au moins dans le voisinage de la position d'implantation du dispositif d'écartement. Les deux supports peuvent présenter un décalage angulaire et n'être pas parfaitement parallèles entre eux, et la présente invention vise tout particulièrement à compenser ce décalage angulaire.

Le premier et le second support présentent chacun une ouverture disposée en vis-à-vis l'une de l'autre, permettant de placer le dispositif d'écartement entre les deux supports et permettant le passage d'un organe de verrouillage retenu du coté de chaque face externe des supports. Le dispositif d'écartement peut également avoir pour fonction de permettre la solidarisation d'un élément complémentaire sur la surface externe de l'un ou l'autre des supports. Dans ce cas, l'organe de verrouillage, tel qu'une vis traversante, permet également de fermement plaquer l'élément complémentaire contre la face externe de l'un des supports.

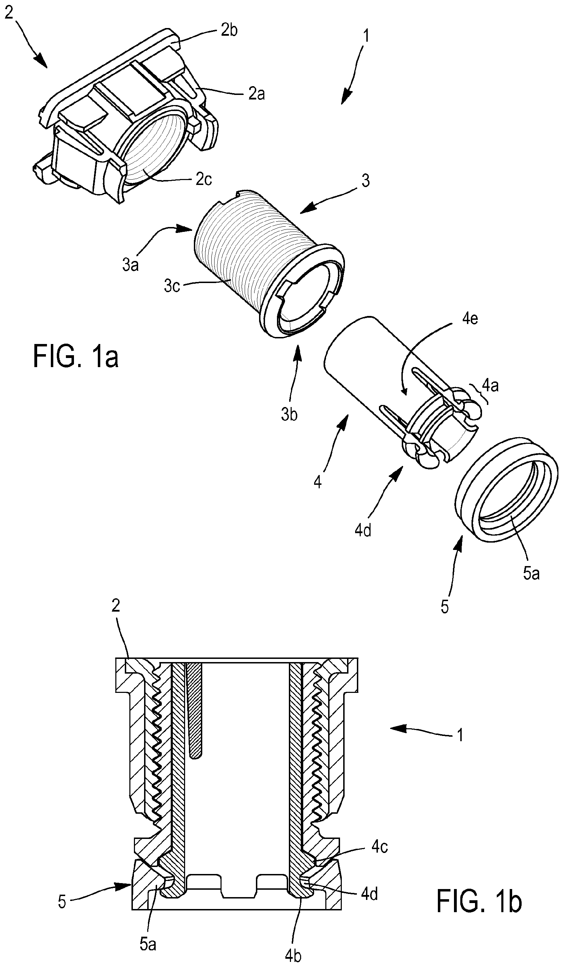

Les figures 1a et 1b représentent respectivement une vue éclatée et une coupe d'un dispositif d'écartement 1 selon un premier mode de réalisation conforme à l'invention.

Le dispositif d'écartement 1 comprend une pièce de fixation 2 présentant un filetage interne ou taraudage 2c. La pièce de fixation 2 est destinée à être rendue solidaire du premier support. À cet effet, elle peut comporter un organe 2a de retenue et un corps d'appui 2b. Le dispositif d'écartement 1 peut être introduit et positionné dans l'espace compris entre les deux supports par une ouverture préalablement aménagée dans le premier support. L'organe de retenue 2a peut comprendre une ou une pluralité de pattes flexibles 2a qui se contracte lorsque le dispositif d'écartement est introduit dans l'ouverture pour mettre en butée la face externe du premier support sur le corps d'appui 2b, et qui se rétracte pour verrouiller cette position. La pièce de fixation 2 peut également présenter une section extérieure non circulaire de manière à bloquer sa rotation vis-à-vis du support, une fois mise en place sur le premier support, comme cela est bien visible sur la figure la.

Le dispositif d'écartement 1 conforme à l'invention comprend également une pièce d'écartement 3 présentant un filetage externe 3c. La pièce d'écartement 3 et la pièce de fixation 2 sont conçues pour être assemblés l'une à l'autre au niveau de leurs filetages 3c, 2c respectifs. L'entraînement en rotation de la pièce d'écartement 3 permet de déplacer les deux pièces l'une par rapport à l'autre selon une direction axiale.

La pièce d'écartement 3 présente une forme de cylindre, le filetage étant formé sur la surface extérieure de ce cylindre, de sorte à pouvoir être vissé et dévissé sur la pièce de fixation 2.

La pièce d'écartement 3 présente deux extrémités, une première extrémité d'entraînement 3a orientée du côté de la pièce de fixation 2, et une extrémité d'appui 3b à l'opposé de l'extrémité d'entrainement 3a. L'extrémité d'appui 3b est à bout sphérique.

Le dispositif d'écartement comprend également une bague d'appui 5 maintenue contre la pièce d'écartement, du côté de son extrémité d'appui 3b, et présentant une première face plane pour prendre appui sur le second support, et une seconde face à calotte sphérique pour recevoir l'extrémité d'appui à bout sphérique 3b de la pièce d'écartement 3.

Lorsque le dispositif d'écartement 1 est disposé dans l'espace compris entre les deux supports, la face plane de la bague 5 a pour fonction de prendre appui sur le second support pour préserver la distance séparant les deux supports même en présence d'efforts tendant à les rapprocher l'un de l'autre. L'extrémité d'appui à bout sphérique 3b de la pièce d'écartement 3 coopère avec la calotte sphérique de la bague d'appui 5 pour former une rotule, permettant à la bague d'appui 5 de s'incliner et mettre en contact plan sa première face plane avec le second support, même si celui-ci présente un décalage angulaire avec le premier support.

Pour permettre le réglage de cette prise d'appui, le dispositif 1 conforme à l'invention comporte avantageusement une bague d'entraînement 4. La bague d'entraînement 4 est conçue pour être logée dans la pièce d'écartement 3, par exemple à l'intérieur du cylindre. La bague d'entrainement 4 peut elle-même présenter la forme d'un cylindre creux dont le diamètre externe correspond sensiblement au diamètre interne du cylindre formant la pièce d'écartement 3, pour pouvoir y être insérée. La bague d'entraînement 4 et la pièce d'écartement 3 sont associées entre elles de sorte qu'un couple de rotation axial appliqué à la bague d'entraînement 4 soit transmis à la pièce d'écartement 3. Ce couplage peut être réalisé par tout moyen connu en soi, par exemple en donnant au cylindre interne de la pièce d'écartement 3 et au cylindre externe de la bague d'entrainement 4 une section non circulaire prévenant la rotation axiale d'une pièce vis-à-vis de l'autre.

De manière avantageuse, la bague d'entrainement 4 porte au moins une empreinte ou un bossage permettant, par l'intermédiaire d'un outil adapté, d'appliquer un couple d'entraînement à la bague 4, de manière à la déplacer en rotation. L'empreinte ou le bossage peut être formé sur la paroi interne de la bague 4. Une pluralité de telles empreintes ou bossages peut être disposée pour former une fente, une étoile, un carré dans la bague d'entrainement 4 afin de faciliter la coopération avec l'extrémité d'un outil, tel qu'un tournevis, et son entraînement en rotation.

La bague d'entraînement 4 permet d'entraîner en rotation la pièce d'écartement 3, lorsqu'elle est elle-même entrainée en rotation par un outil. On peut de la sorte, visser et/ou dévisser la pièce d'écartement 3 dans la pièce de fixation 2, et ajuster le déplacement axial de la pièce d'écartement 3 pour mettre en contact la bague d'appui 5 avec le deuxième support.

Pour maintenir la bague d'appui 5 contre ou à proximité de la pièce d'écartement 3, la bague d'entrainement 4 est munie d'un système d'accroche 4a coopérant avec un épaulement interne 5a de la bague d'appui 5 pour les solidariser l'une à l'autre. Le système d'accroche 4a peut comprendre un épaulement externe 4b du coté de l'extrémité de la bague d'entrainement 4 orientée vers la bague d'appui 5 et au moins une languette flexible 4e portant sur sa surface une collerette de retenue 4c. La collerette de retenue 4c et l'épaulement externe 4b définissent un cran 4d permettant de clipper l'épaulement interne 5a de la bague d'appui 5 sur la bague d'entrainement 4. Le cran 4d et l'épaulement 5a présentent entre eux un jeu de fonctionnement suffisant pour permettre des mouvements de faibles amplitudes de la bague d'appui 5 vis-à-vis de la bague d'entraînement 4. Préférentiellement, le système d'accroche 4a comprend une pluralité de languettes flexibles 4e, définissant autant de crans 4d répartis sur le contour de l'extrémité de la bague d'entrainement 4. Le jeu de fonctionnement est dans ce cas présent au niveau de chaque cran 4d et réparti tout autour de la calotte sphérique.

Dans le premier mode de réalisation de la figure 1A, la bague d'entrainement 4 est munie de quatre languettes 4e définie par quatre fentes débouchantes. Dans ce mode de réalisation, la collerette de retenue 4c et l'épaulement externe 4b sont portés par chaque languette flexible 4e.

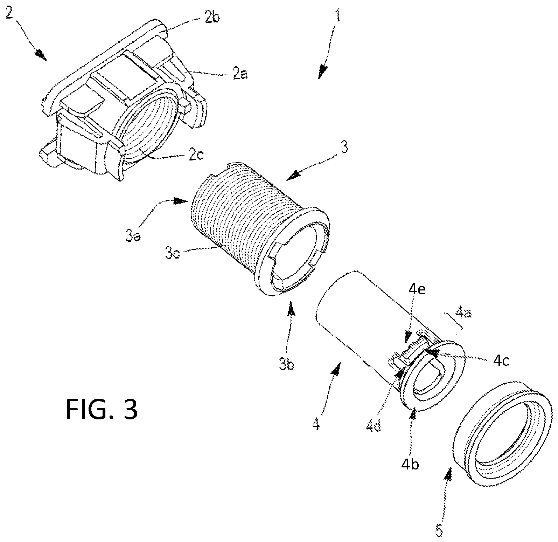

La figure 3 représente un deuxième mode de réalisation du dispositif d'écartement, dans lequel les fentes définissant les languettes 4e du système d'accroche 4a ne débouchent pas sur l'extrémité de la bague d'entraînement 4. Dans ce mode de réalisation, seul la collerette de retenue 4c est portée par la languette flexible 4e. L'épaulement externe 4b est solidaire du reste de la bague d'entrainement 4. Dans ce mode de réalisation, pour clipper la bague d'appui 5 sur le système d'accroche 4a, on fait glisser cette bague 5 le long de la bague d'entrainement 4, après l'avoir introduite depuis l'extrémité opposée à celle portant le système d'accroche 4a.

Quel que soit le mode de réalisation choisi du système d'accroche 4a, l'extrémité d'appui 3b de la pièce d'écartement 3 peut comprendre un évidement dont les dimensions sont suffisantes pour accueillir la collerette de retenue 4c. Ainsi, on peut maintenir la bague d'appui 5 contre la pièce d'écartement 3, la calotte sphérique de la bague d'appui 5 recevant l'extrémité d'appui à bout sphérique 3b de la pièce d'écartement 3 pour former une rotule.

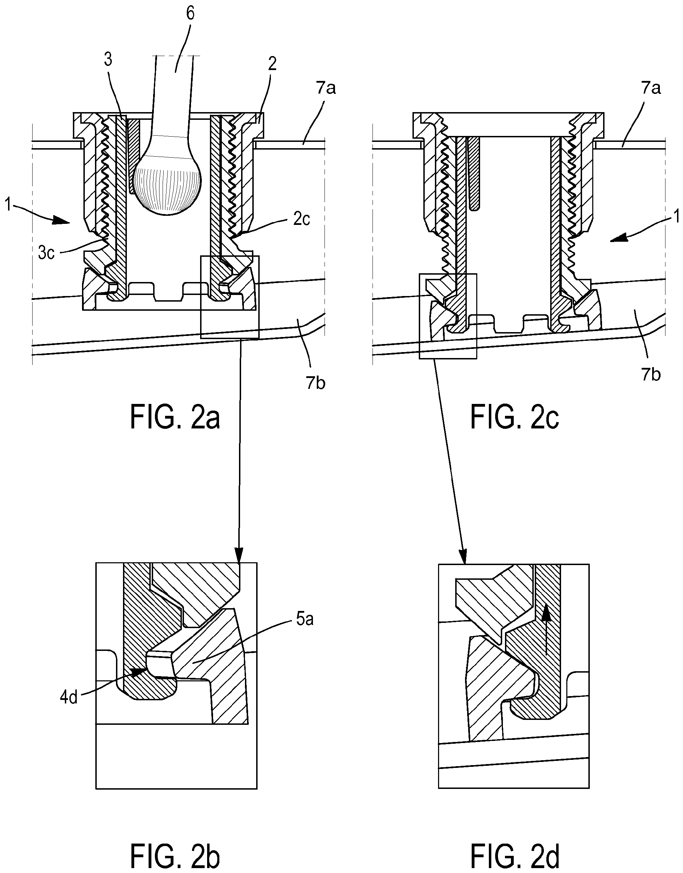

Cette configuration avantageuse peut être mise à profit pour compenser un décalage angulaire existant entre deux supports lors de la mise en place du dispositif d'écartement 1, comme cela va être décrit en détail en référence aux figures 2a à 2d. La figure 2a représente une vue en coupe d'un dispositif 1 conforme à l'invention fixé sur un premier support 7a. Un outil 6 est positionné du côté de la pièce de fixation 2, c'est-à-dire du côté de la face externe du premier support 7a sur lequel est fixé le dispositif 1. L'outil 6 présente une tête coopérant avec des bossages ou empreintes formés sur la face interne de la bague d'entraînement 4.

Le mouvement de rotation sur lui-même de l'outil 6, éventuellement complétée de son inclinaison, entraîne en rotation la bague 4 et la pièce d'écartement 3 qui lui est couplée.

Les filetages 2c, 3c dont sont munies les pièces de fixation 2 et d'écartement 3 conduisent à déplacer axialement la pièce d'écartement 2 jusqu'à ce qu'une partie de la face plane de la bague d'appui 5 vienne en contact avec le deuxième support 7b. Ce support 7b présente un décalage angulaire, qui peut être de plusieurs degrés, avec le premier support 7a.

La figure 2b représente une vue agrandie du système d'accroche 4a de la bague d'entrainement 4 coopérant avec l'épaulement 5a de la bague d'appui 5, avant que ce contact ne se réalise. On observe le jeu existant entre le cran 4d et l'épaulement interne 5a qui repose dans ce cran.

Le mouvement maintenu de rotation de l'outil 6 continue à entraîner le déplacement axial de la pièce d'écartement 3, pour placer le dispositif d'écartement 1 dans une configuration finale représentée sur la figure 2c.

Dans cette configuration, la face plane de la bague d'appui 5 assure un contact plan avec le second support 7b. L'inclinaison de la bague d'appui 5 est rendue possible par la liaison rotule formée entre cette bague d'appui 5 et l'extrémité d'appui à bout sphérique 3a de la pièce d'écartement 3. Elle est également rendue possible par le jeu de fonctionnement existant dans le système d'accroche 4a.

La figure 2d représente une vue agrandie du système d'accroche 4a de la bague d'entrainement coopérant avec l'épaulement 5a de la bague d'appui 5, après que le contact plan se soit réalisé. On observe que le jeu s'est réparti de manière différenciée dans les crans 4d formant le système d'accroche, de manière à permettre la rotation de la bague d'appui 5.

Lorsque le dispositif d'écartement 1 sert également de support de fixation à un élément complémentaire, la mise en place et l'ajustement du dispositif 1 se réalisent avant de positionner l'élément complémentaire, par exemple sur la face externe du premier support 7b, au niveau de la pièce de fixation 2. L'outil 6 peut donc être introduit de ce côté du support pour la mise en place du dispositif 1, puis l'éventuel élément complémentaire peut être fixé sur la pièce de fixation 2 au cours d'une étape l'assemblage final, par exemple en insérant une vis de fixation traversante, introduite du côté de la face externe du deuxième support 7b, l'élément complémentaire formant alors écrou.

L'invention trouve une application toute particulière dans le domaine de l'automobile, pour rendre solidaire une barre, formant l'élément complémentaire, sur le toit d'un véhicule.

Pour des raisons de facilité de fabrication et de coût, le dispositif 1 est avantageusement constitué de matière plastique, obtenu par moulage ou par extrusion. Mais il pourrait être constitué d'un autre matériau ou être obtenu par un autre procédé de fabrication, par exemple par fabrication additive.

Bien entendu, l'invention n'est pas limitée au mode de mise en œuvre décrit et on peut y apporter des variantes de réalisation sans sortir du cadre de l'invention tel que défini par les revendications.

## Revendications

1. Dispositif d'écartement (1) à rattrapage angulaire pour combler l'espace séparant un premier support d'un second support disposé en regard du premier support, le dispositif d'écartement (1) comprenant :
- une pièce de fixation (2) destinée à être rendue solidaire du premier support et présentant un filetage interne (2c);
- une pièce d'écartement (3) présentant un filetage externe (3c) et une extrémité d'appui (3b) à bout sphérique;
- une bague d'entrainement (4) comprenant un système d'accroche (4a), la bague d'entrainement (4) étant logée dans la pièce d'écartement (3) et couplée à cette pièce ;
la pièce de fixation (2) et la pièce d'écartement (3) étant assemblées entre elles au niveau de leurs filetages respectifs (2c, 3c) et pouvant se déplacer l'une par rapport à l'autre selon une direction axiale pour ajuster le dispositif d'écartement (1) à la distance séparant les deux supports, le dispositif d'écartement comprenant une bague d'appui (5) maintenue contre la pièce d'écartement et retenue par le dispositif d'accroche (4a) de la bague d'entrainement (4), la bague d'appui (5) présentant une première face plane pour prendre appui sur le second support, et une seconde face à calotte sphérique recevant l'extrémité d'appui à bout sphérique (3b) de la pièce d'écartement.

2. Dispositif d'écartement (1) selon la revendication précédente dans lequel la bague d'entraînement (4) est munie d'au moins un bossage ou d'au moins une empreinte pour faciliter l'application d'un couple de rotation par un outil.

3. Dispositif d'écartement (1) selon la revendication précédente dans lequel le système d'accroche (4a) et la bague d'appui (5) présentent un jeu de fonctionnement suffisant pour permettre un mouvement la bague d'appui (5).

4. Dispositif d'écartement (1) selon la revendication précédente dans lequel le système d'accroche (4a) est formé d'au moins un cran (4d) pour recevoir un épaulement interne (5c) de la bague d'appui (5).

5. Dispositif d'écartement (1) selon la revendication précédente dans lequel le cran (4d) est défini par un épaulement externe (4b) et une collerette de retenue (4c) porté par une languette flexible (4e).

6. Dispositif d'écartement (1) selon la revendication précédente dans lequel l'épaulement externe (4b) est porté par la languette flexible (4e).

7. Dispositif d'écartement (1) selon l'une des revendications précédentes dans laquelle la pièce de fixation (2) comprend un corps d'appui (2b) et un organe de retenue (2a) permettant de solidariser le dispositif (1) au premier support.

## Patentansprüche

1. Winkelausgleichende Abstandshaltevorrichtung (1) zur Überbrückung des Spalts zwischen einem ersten Träger und einem zweiten Träger, der gegenüber dem ersten Träger angeordnet ist, wobei die Abstandshaltevorrichtung (1) Folgendes umfasst:
- ein Befestigungsteil (2), das dazu bestimmt ist, mit dem ersten Träger fest verbunden zu werden und ein Innengewinde (2c) aufweist;
- ein Abstandshalterteil (3), das ein Außengewinde (3c) und ein kugelförmiges Auflageende (3b) aufweist;
- einen Antriebsring (4), umfassend ein Hakensystem (4a), wobei der Antriebsring (4) in dem Abstandshalterteil (3) untergebracht und mit diesem Teil gekoppelt ist;
wobei das Befestigungsteil (2) und das Abstandshalterteil (3) an ihren jeweiligen Gewinden (2c, 3c) miteinander verbunden sind und relativ zueinander in einer axialen Richtung beweglich sind, um die Abstandshaltevorrichtung (1) auf den Abstand zwischen den beiden Trägern einzustellen, wobei die Abstandshaltevorrichtung einen Auflagering (5) aufweist, der gegen das Abstandshalterteil gehalten wird und von der Vorrichtung (4a) zum Einhaken des Antriebsrings (4) gehalten wird, wobei der Auflagering (5) eine erste ebene Fläche zum Aufliegen auf dem zweiten Träger und eine zweite Fläche mit einer kugelförmigen Kappe aufweist, die das kugelförmige Auflageende (3b) des Abstandshalterteils aufnimmt.

2. Abstandshaltevorrichtung (1) nach dem vorstehenden Anspruch, wobei der Antriebsring (4) mit mindestens einem Vorsprung oder mindestens einer Vertiefung versehen ist, um das Aufbringen eines Drehmoments durch ein Werkzeug zu erleichtern.

3. Abstandshaltevorrichtung (1) nach dem vorstehenden Anspruch, wobei das Hakensystem (4a) und der Auflagering (5) ein ausreichendes Betriebsspiel aufweisen, um eine Bewegung des Auflagerings (5) zu ermöglichen.

4. Abstandshaltevorrichtung (1) nach dem vorhergehenden Anspruch, wobei das Hakensystem (4a) durch mindestens eine Kerbe (4d) zum Aufnehmen einer inneren Schulter (5c) des Auflagerings (5) gebildet wird.

5. Abstandshaltevorrichtung (1) nach dem vorhergehenden Anspruch, wobei die Kerbe (4d) durch eine äußere Schulter (4b) und einen Haltekragen (4c) definiert ist, der von einer flexiblen Zunge (4e) getragen wird.

6. Abstandshaltevorrichtung (1) nach dem vorstehenden Anspruch, wobei die äußere Schulter (4b) von der flexiblen Zunge (4e) getragen wird.

7. Abstandshaltevorrichtung (1) nach einem der vorhergehenden Ansprüche, wobei das Befestigungsteil (2) einen Auflagekörper (2b) und ein Halteelement (2a) aufweist, das das Befestigen der Vorrichtung (1) an dem ersten Träger ermöglicht.

## Claims

1. Spacer device (1) with angular adjustment for bridging the gap between a first support and a second support arranged opposite the first support, the spacer device (1) comprising:
- a fastener (2) intended to be rigidly connected to the first support and having an internal thread (2c);
- a spacer (3) having an external thread (3c) and a support end (3b) with a spherical tip;
- a drive ring (4) comprising a hooking system (4a), the drive ring (4) being housed in the spacer (3) and coupled thereto;
the fastener (2) and the spacer (3) being interconnected at their respective threads (2c, 3c) and being movable relative to one other in an axial direction in order to adjust the spacer device (1) to the distance separating the two supports, the spacer device comprising a support ring (5) held against the spacer and retained by the hooking device (4a) of the drive ring (4), the support ring (5) having a first flat face for bearing on the second support, and a second face with a spherical dome receiving the support end with a spherical tip (3b) of the spacer.

2. Spacer device (1) according to the preceding claim, wherein the drive ring (4) is provided with at least one embossment or at least one recess to facilitate the application of a torque by a tool.

3. Spacer device (1) according to the preceding claim, wherein the hooking system (4a) and the support ring (5) have sufficient operating clearance to allow movement of the support ring (5).

4. Spacer device (1) according to the preceding claim, wherein the hooking system (4a) is formed by at least one notch (4d) for receiving an internal shoulder (5c) of the support ring (5).

5. Spacer device (1) according to the preceding claim, wherein the notch (4d) is defined by an external shoulder (4b) and a retaining collar (4c) supported by a flexible tongue (4e).

6. Spacer device (1) according to the preceding claim, wherein the outer shoulder (4b) is supported by the flexible tongue (4e).

7. Spacer device (1) according to any of the preceding claims, wherein the fastener (2) comprises a support body (2b) and a retaining member (2a) making it possible to rigidly connect the device (1) to the first support.
